Europäisches Patentamt

European Patent Office

Office européen des brevets

(19)

(11) Publication number: **0 155 436**

A1

## (12) EUROPEAN PATENT APPLICATION

(21) Application number: 84830044.8

(22) Date of filing: 20.02.84

(51) Int. Cl.⁴: **B 29 C 45/37**
B 29 C 69/00

(43) Date of publication of application:
25.09.85 Bulletin 85/39

(84) Designated Contracting States:
AT BE CH DE FR GB IT LI LU NL SE

(71) Applicant: Gussoni, Aldo
Via Vacciano 77
Bagno A Ripoli (Firenze)(IT)

(72) Inventor: Gussoni, Aldo
Via Vacciano 77
Bagno A Ripoli (Firenze)(IT)

(74) Representative: Sassatelli, Franco
INIP via Ruggi 5
I-40137 Bologna(IT)

(54) **Apparatus for the manufacture of plastic handles for small bags.**

(57) Half-moulds are used to be completed with interchangeable dowels (41, 42) with intermediate fitting permitting shape variability. Dowelling on the mobile half-mould (2) is in three sectors (5, 10, 6), the central of which is fixed whereas the side ones are mobile. When the mobile half-mould (2) starts returning, a switch (1) acts a pair of jacks (3,4) starting the converging movement of the mobile sectors which, rotating on cams, are closed. This brings to buttoning by fitting automatic blocking components of the handle halfparts, which then get out from the forming hollows by means of extractors in the form of pivots and fall into a container. The shaped are carried out through the continuity of the hollows on the half-parts of the half-moulds, where the two stick terminals (11,12,18-21,28,29) are formed, and on the dowels where the central part (16,17,24,26,27,34) is formed which completes the said stick and foresees the handle. The system allows the employ of half-moulds as fixed parts of the machine, thus reducing the installation costs and the working time as well.

FIG.1

TITLE MODEL
see front page

- 1 -

<u>System for carrying out handles in plastic materials for small bags</u>.
The invention refers to a system for producing handles in plastic ma
terials for small bags, which permits to lower the installation costs and to reduce the working times. At present, for the handle production, printing half-parts are used on the machines but they are
to be replaced when the working type is changed. This causes conside
rable installation costs and requires large presetting times since
the said part sizes and weights are considerable and require delicate mounting phases. The invented system foresees a fabrication form
of a new conception which, as a principle, permits to consider the
printing half-parts as unremovable ones, or at any rate not necessarily to replace on the machine when the working type changes. These
printing half-parts, infact, act as containing and imposing structure of other replacable part, permitting the easy mounting of the
said replaceable parts that compose all the forming parts. In this
way the composing part will result from the composition in succession
of an analogous part for all the workings and of a second intermedia
te part that when replaced will cause the change of the working.

The proceeding employs half-moulds permanently to settle or fixed on
the machine which are to be completed at printing plane with interchangeable dowels. This application is foreseen in an intermediate
longitudinal position on rivots to be inserted and blocked thus per- mitting to the fixed part to operate in containment to facilitate the positioning with mnemonic counterposition. By changing dowelling, the printing parts are prepared for another working form. The mobile half mould is foreseen with three components, of which a central imposing one and two side mobile components. The two mobile sectors are made in correspondence to set in closure on the central sector integral with the structure existing behind. When the mobile half-mould starts the returning phase, a switch acts on a pair of jacks fitted on line on the fixed intermediate parts behind the mobile mould. They start the converging movement of the two mobile sectors which turn on articulations supported on cams and get closed. This phase permits buttoning by binding the automatic blocking half-components, conventionally foreseen properly intervalled on the inside of the handles and connecting sticks, of the two handle parts, which get out from the forming hollows by means of extractors in pivot shape foreseen at intervals in the hollows. Foreseen in this way, the handles fall into a container fitted below. The handle half-parts are carried out by continuity of the hollows on the half-parts of the half-moulds and on the intermediate dowel. On the two containment parts, forming hollows are foreseen of the stick terminals, whereas on the intermediate parte the remaining stick forming part and the handle are formed. By properly alternating the two insertion and containment forms of the blocking automatica parts on the inside handle forms, it is possible to carry out bivalent handle half-parts, thus avoiding stocking remainders which cannot be used.

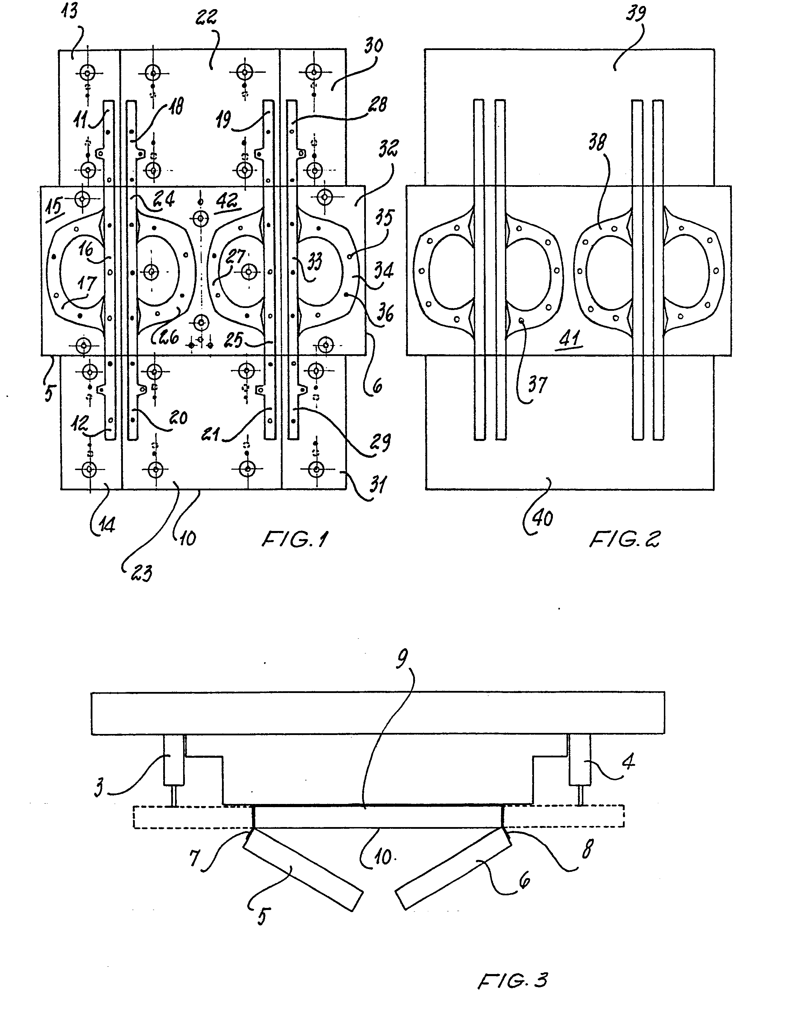

An execution form is illustrated in a merely indicative way and, therefore, not limiting the proceeding, by the drawings of Tables 1 and 2, where fig. 1 is the front view of the half-mould of the mobile parts, which shows the fixed half-parts on printing plane with interposed dowelling consisting of three components. Fig. 2 is the view of the fixed part half-mould which mounts only one component dowelling; in the forming hollows the pivot extractors can be noted for return phase forms. Fig. 3 is a schematic view from above of the mo BAD ORIG...

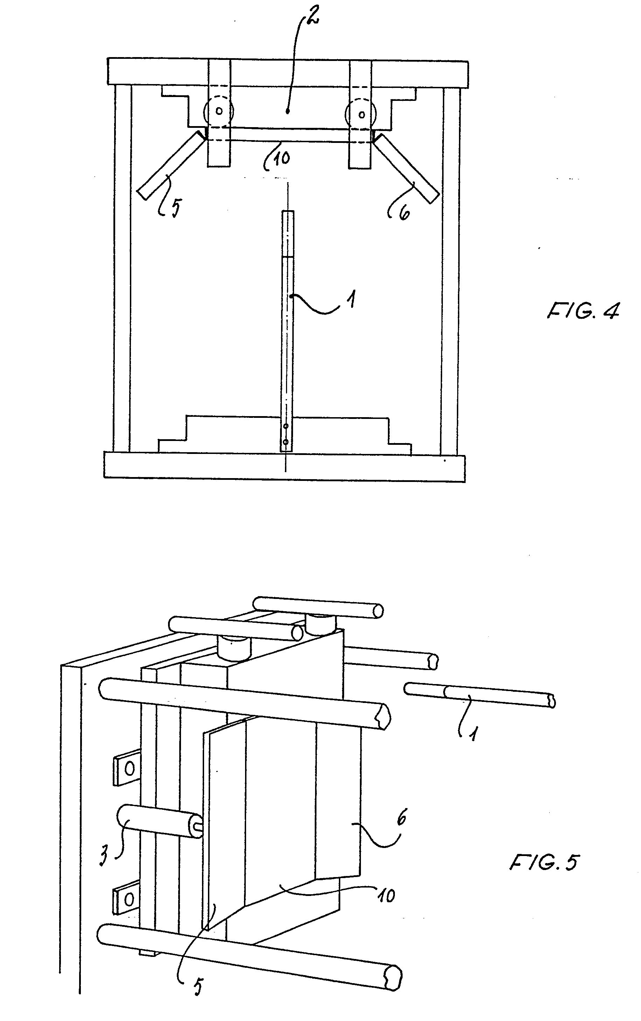

mobile printing half-part with the rotating side sectors. Fig. 4 is a view from above of the printing device. Fig. 5 is the perspective view of the mobile printing part with side sectors in rotation. The machine employs bar 1 which, when part 2 in return phase is detached, acts on a switch which starts a pair of line jacks 3 and 4 starting the mobile sectors 5 and 6 rotating on the counterposed hinges 7 and 8 of fixed part 9. These sectors continue the movement on the cam systems and are brought in closure on intermediate sector 10. The printing forms in version are determined on the mobile half-mould in sector 5 by hollows 11 and 12 on parts 13 and 14 of the beating plane of dowel 15 containing structure, which foresees hollow 16 in connection with the first ones completing the stick with an additional hollow 17 for handle formation. In sector 10 by the hollow pair 18, 19 and 20, 21 on parts 22 and 23 of the beating plane of the containing structure of dowel 42 which foresees blended with the first ones hollows 24 and 25 completing the two sticks and further hollows 26 and 27 for handle formation. In sector 6 from hollows 28 and 29 on parts 30 and 31 of the beating plane of dowel 32 containing structure which foresees hollows 33 blended with the first one completing stick 32: this one foresees hollow 33 blended with the first one and completing the stick as well as the additional hollow 34 forming the handle. In the closing phase the two pair of printing forms are connected by inserting the automatic blocking half-components with pivots 35 and hollows 36 in alternate disposition and in correspondence on the two half-parts the handle consists of. The expulsion of the printing forms is allowed by the pivot extractors 37 acting on helical springs and fitted in intervals on the printing reliefs 38 of the plane consisting of the containment half-parts 39 and 40 and of dowel 41.

The shape of the dowels, the number of the printing forms, each mounting pivot, for motion and activation may be otherwise foreseen.

Claims.

1) System for carrying out handles in plastic materials for small bags, characterized by the fact that it employs half-moulds permanently to settle or fixed on the machine which are to be completed at printing plane with interchangeable dowels. This application is foreseen in an intermediate longitudinal position on pivots to be interted and blocked thus permitting to the fixed part to operate in containment to facilitate the positioning with mnemonic counterposition. By changing dowelling, the printing parts are prepared for another working form.

2) System for carrying out handles in plastic materials for small bags, according to the claim 1, characterized by the fact that the mobile half-mould is foreseen with three components, of which a central imposing one and two side mobile components. The two mobile sectors are made in correspondence to set in closure on the central sector integral with the structure existing behind.

3) System for carrying out handles in plastic materials for small bags, according to the clams 1 and 2, characterized by the fact that when the mobile half-mould starts the returning phase, a switch acts on a pair of jacks fitted on line on the fixed intermediate parts behind the mobile mould. They start the converging movement of the two mobile sectors which turn on articolations supported on cams and get closed. This phase permits buttoning by binding the automatic blocking half-components, conventionally foreseen properly intervalled on the inside of the handles and connecting sticks, of the two handle parts, which get out from the forming hollows by means of extractors in pivot shape foreseen at intervals in the hollows. Foreseen in this way, the handles fall into a container fitted below.

4) System for carrying out handles in plastic materials for small bags, according to the claims 1 - 3, characterized by the fact that the handle half-parts are carried out by continuity of the hollows on the half-parts of the half-moulds and on the intermediate dowel.

5) System for carrying out handles in plastic materials for small bags, according to the claims 1 - 4, characterized by the fact that on the two containment parts, forming hollows are foreseen of the stick terminals, whereas on the intermediate part the remaining stick forming part and the handle are formed.

6) System for carrying out handles in plastic materials for small bags, according to the claims 1 - 5, characterized by the fact that by properly alternating the two insertion and containment forms of the blocking automatica parts on the inside handle forms, it is possible to carry out bivalent handle half-parts, thus avoiding stocking remainders which cannot be used.

7) System for carrying out handles in plastic materials for small bags, according to claims 1 - 6, characterized by the fact that it employs bar 1 which, when part 2 in return phase is detached, acts on a switch which starts a pair of line jacks 3 and 4 starting the mobile sectors 5 and 6 rotating on the counterposed hinges 7 and 8 of fixed part 9. These sectors continue the movements on the cam systems and are brought in closure on intermediate sector 10.

8) System for carrying out handles in plastic materials for small bags, according to claims 1 - 7, characterized by the fact that the printing forms in version are determined on the mobile half-mould in sector 5 by hollows 11 and 12 on parts 13 and 14 of the beating plane of dowel 15 containing structure, which foresees hollow 16 in connection with the first one completing the stick with an additional hollow 17 for handle formation. In sector 10 by the hollow pair 18, 19 and 20, 21 on parts 22 and 23 of the beating plane of the containing structure of dowel 42 which foresees blended with the first one hollows 24 and 25 completing the two sticks and further hollows 26 and 27 for handle formation. In sector 6 from hol lows 28 and 29 on plarts 30 and 31 of the beating plane of dowel 32 containing structure which foresees hollows 33 blended with the first ones completing stick 32: this one foresees hollow 33 blended with the first one and completing the stick as well as the additional hollow 34 forming the handle.

9) System for carrying out handles in plastic materials for small bags, according to the claims 1 - 8, characterized by the fact that in the closing phase the two pair of printing forms are connected by inserting the automatic blocking hafl-components with pivots 35 and hollows 36 in alternate disposition and in correspondence on the two half-parts the handle consists of.

10) System for carrying out handles in plastic material for small bags, according to the claims 1 - 9, characterized by the fact that the expulsion of the printing forms is allowed by the pivot extractors 37 acting on helical springs and fitted in intervals on the printing reliefs 38 of the plane consisting of the containment half-parts 39 and 40 and of dowel 41.

0155436

1/2

FIG.1

FIG.2

FIG.3

0155436

FIG. 4

FIG. 5

# European Patent Office

## EUROPEAN SEARCH REPORT

Application number

EP 84 83 0044

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 048 702 (M. DIAZZI) * page 2, lines 22-28; page 3, line 24 - page 4, line 8; claims 1,2; figures 1-9 * | 1-10 | B 29 C 45/37 B 29 C 69/00 |
| Y | US-A-4 416 604 (E.S. BENDER et al.) * column 1, line 63 - column 2, line 43 * | 1,4-6, 8 | |
| Y | GB-A-1 480 744 (MARDON ILLINGWORTH LTD.) * page 1, line 54 - page 2, line 43; page 2, line 121 - page 3, line 8; figures 1-4 * | 2,3,7, 9,10 | |
| A | US-A-4 158 910 (W.E. HANAS & R.R. SUTKO) * column 3, line 45 - column 4, line 13; figures 1-3 * | | TECHNICAL FIELDS SEARCHED (Int Cl 4) |
| A | US-A-2 873 227 (M.W. OLSON & I.D. DOBBS) * column 4, lines 3-34; figures 1,2 * | | B 29 C B 31 B |
| A | GB-A-2 066 138 (CHLORIDE GROUP LTD.) * page 1, lines 10-28 * | | |

The present search report has been drawn up for all claims

| Place of search | Date of completion of the search | Examiner |
|---|---|---|
| THE HAGUE | 22-10-1984 | SZAMOCKI G.J.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82